# EUROPEAN PATENT SPECIFICATION

(11) **EP 4 164 452 B1**
(45) Date of publication and mention of the grant of the patent: **31.12.2025**
(21) Application number: 21849483.9
(22) Date of filing: 03.05.2021
(51) Int. Cl.: A47C 19/00, F16B 12/54, F16B 12/60, A47C 19/02

(54) **A DISASSEMBLED BED BASE**
ZERLEGBARE BETTBASIS
BASE DE LIT DÉSASSEMBLÉE

(30) Priority: 28.07.2020 TR 202012015
(43) Date of publication of application: 19.04.2023
(73) Proprietor: Istikbal Mobilya Sanayi Ve Ticaret A.S., Melikgazi/Kayseri (TR)
(72) Inventor: KOKER, Ibrahim, Melikgazi/Kayseri (TR)
(74) Representative: Samson & Partner Patentanwälte mbB
(86) International application number: PCT/TR2021/050420
(87) International publication number: WO 2022/025842

(56) References cited:
- US-A1- 2009 113 626
- US-A1- 2015 089 738
- US-A1- 2019 387 888
- US-A1- 2020 128 966
- US-B1- 8 931 123

## Description

### TECHNICAL FIELD OF THE INVENTION

The present invention relates to a disassembled bed base used in the furniture industry.

### TECHNICAL STATUS

Bedrooms, being one of the first designed parts of the home, may have various characteristics. Materials and designs used in bedrooms have great importance. Bed bases are an indispensable part of the bedrooms. Nowadays, individuals prefer products that do not occupy space in terms of volume, provide ease of assembly and delivery opportunities when purchasing modern or classic style furniture of their preference.

As is, the known technical status of bed bases featuring either wooden or metal construction are manufactured in a monoblock body and these bed bases usually occupy a lot of space in terms of volume and in addition have a heavy structure.

Such a bed base is known for example from US 8 931 123 B1.

The technique, as usually applied in the known systems, consists of welding together the parts of the whole into a monoblock body. Consequently, this causes elevated freight and weight value parameters. The accessories (e.g., legs, concealed legs, etc.) to be attached to the available structure as well as the fabrics to be upholstered and the materials (wooden lathes, medium density fiberboards (MDF), particle boards, fittings, and fasteners, etc.) required for the upholstery of these fabrics are consumed in high quantities.

### DESCRIPTION OF THE INVENTION

The present invention relates to a disassembled bed base developed to overcome the aforementioned disadvantages and introduce further novel advantages into the relevant technical field.

The present invention relates to a bed base that provides ease of assembly and that can be manufactured and delivered in a disassembled configuration.

Amongst the advantages of the said disassembled bed base are;
- Able to be manufactured in disassembled configuration;
- Able to be shipped and delivered in disassembled configuration;
- Having a disassembled configuration instead of a welded, monoblock piece, thereby reducing the space occupied in terms of volume;
- Featuring decreased freight and weight parameters, and
- Eliminating the excess use of fabrics to be upholstered as well as the quantities of materials necessary for the fabrics to be used thereon.
- The product obtained by means of the present invention is assembled and used easily anywhere and anytime by means of simple fittings without requiring assistance from technical service.
- As the inventive product occupies less space volume-wise and is lightweight, it may be disassembled easily when a user desires to make additional room in the living space.

### DESCRIPTION OF THE FIGURES

Exemplary applications of the present invention which is briefly summarized above and will be disclosed in detail below, shown in the attached figures are provided only for illustrative purposes and demonstrate only some of the examples and/or applications of the present invention according to one or a plurality of embodiments. Said figures are provided only to provide a better understanding of the present invention, and therefore cannot be considered as limitations imposed on the scope and the applicability of the present invention. It should be noted that said figures are not necessarily scaled in order to ensure clarity and ease of illustration.
- **FIGURE 1**: illustrates the perspective view of the frame of the invention disassembled bed base.
- **FIGURE 2**: illustrates the perspective view of the invention disassembled bed base, wherein a fastener, particle board, and interfacing are installed thereto.
- **FIGURE 3**: illustrates a perspective view of a plywood fish joint piece attached to the invention disassembled bed base.
- **FIGURE 4**: illustrates the bolt and L-shaped fish joint piece of the invention disassembled bed base.

### DESCRIPTION OF THE DETAILS IN FIGURES

1-Vertical Sheet Metal Profile
2-Horizontal Sheet Metal Profile
3-Inner Sheet Metal Profile
4-Concealed Plastic Leg
6-Bolt
7-L-Shaped Fish Joint Piece
8-Metal Construction
9-Metal Fittings
13-Plywood Laths
14-Fastener
15-Composition Board
16-Fiberboard
17-Particle Board
18-interfacing

### DETAILED DESCRIPTION OF THE INVENTION

In the detailed description provided herein, preferred alternatives of the invention disassembled bed base are described only to provide a better understanding of the subject and without creating any limiting effect.

The present invention relates to a disassembled bed base that can be manufactured and delivered in disassembled configuration, that can be easily assembled and installed and that occupies less space in terms of volume.

A disassembled bed base, characterized in that, it comprises the components of; vertical sheet metal profile (1), horizontal sheet metal profile (2), inner sheet metal profile (3), concealed plastic leg (4), bolt (6), and L-shaped fish joint piece (7), and metal fittings (9).

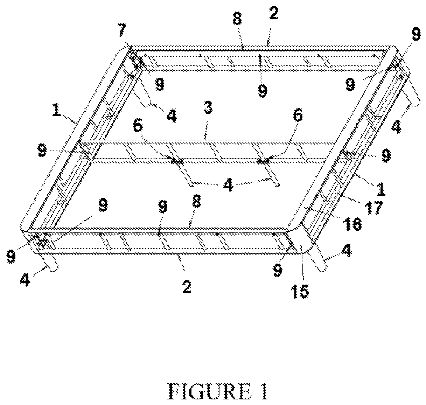

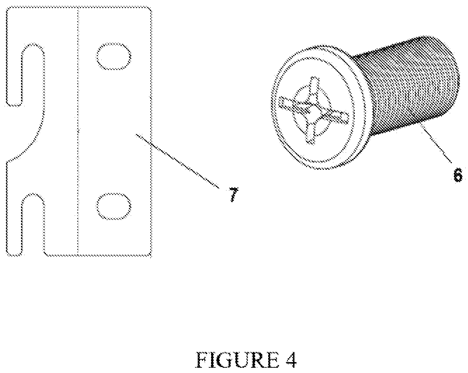

As illustrated in Figure 1, the inventive disassembled bed base is assembled by welding the vertical sheet metal profile (1), horizontal sheet metal profile (2), and inner sheet metal profile (3) to each other. Said bolt (6), L-shaped fish joint piece (7), and metal fittings (9) are components that can be assembled together. Thus, metal fittings (9) are attached to one another by means of the bolt (6) and L-shaped fish joint piece (7). Figure 4 illustrates said bolt (6) and the L-shaped fish joint piece (7).

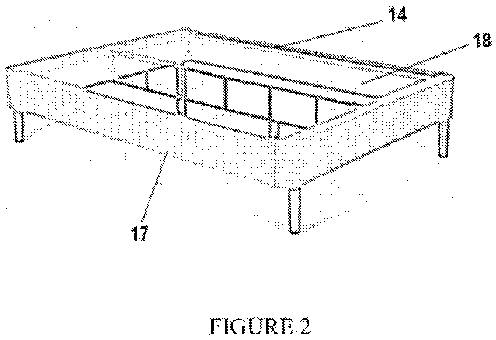

As shown in Figure 1 and Figure 2, wooden components like composition board (15), fiberboard (16), and particle board (17) are used in the structure in order to enable the frame of the invention disassembled bed base to be upholstered with fabric.

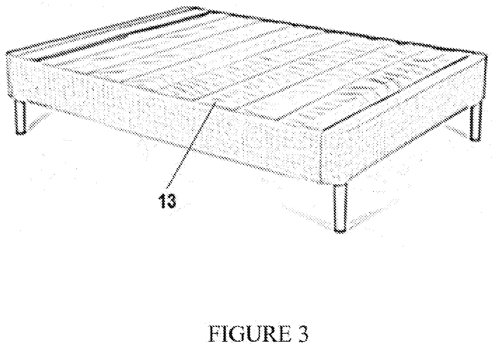

As illustrated in Figure 3, plywood lathe (13), which is inserted into an interfacing (18) is used in order to place a mattress on the frame of the inventive disassembled bed base. Male-female fastener (14) is used in order to prevent the plywood lathe (13) from bending and making noise due to its structure. Plywood laths (13) inserted into interfacing (18) are positioned onto the inventive disassembled bed base by means of the sheet metal profiles (1, 2, 3). Sheet metal profiles (1, 2, 3) are positioned on the plywood laths (13) inserted into interfacing (18).

In the invention disassembled bed base, the vertical sheet metal profile (1) is preferably selected such that it features a height of 5.5 cm, 15 cm, 161 cm, 151 cm, and a thickness of 10x10x1 mm. Preferably the horizontal sheet metal profile (2) is selected with a height of 187 cm, 5.5 cm, 161 cm, 151 cm, and a thickness of 10x20 0.9 mm. In the invention disassembled bed base, it is further preferred that the inner sheet metal profile (3) is selected such that it has a height of 187 cm and a thickness of 20x20 0.9 mm. Concealed plastic leg (4) used in the invention disassembled bed base is preferably selected so as to have a height of 178 cm and a thickness of 20x25 0.9 mm.

As the frame structure of the invention disassembled bed base is illustrated in Figure 1, at least two vertical sheet metal profiles (1) with a thickness of 10x10x1 mm are positioned into the vertical section of the frame; at least two horizontal sheet metal profiles (2) with a thickness of 10x20 0.9 mm are positioned into the horizontal section of the frame, and at least one inner sheet metal profile (3) with a thickness of 20x20 0.9 mm is positioned into the inner section of the frame.

The invention disassembled bed base preferably has a volume of 0.116 m³ and a weight of 25.2 kg. Thus, the invention disassembled bed base offers significant advantages in terms of delivery and assembly.

The invention disassembled bed base is lightweight as it consists of wooden, metal, and plastic materials.

## Claims

1. A disassembled bed base, that can be manufactured and delivered in disassembled configuration, **characterized in that**, it comprises; vertical sheet metal profile (1), horizontal sheet metal profile (2), inner sheet metal profile (3),
wherein, when assembling the disassembled bed base, the vertical sheet metal profile (1), horizontal sheet metal profile (2), and inner sheet metal profile (3) are welded to each other, thus forming a frame structure, the disassemble bed base further comprising a concealed plastic leg (4), a bolt (6), a L-shaped fish joint piece (7), and
metal fittings (9), wherein when assembling the disassembled bed base the metal fittings (9) are attached to one another by means of the bolt (6) and
L-shaped fish joint piece (7).

2. A disassembled bed base according to Claim 1, **characterized in that**, it comprises metal fittings (9) that are attached to one another by means of bolt (6) and L-shaped fish joint piece (7).

3. A disassembled bed base according to Claim 1 or Claim 2, **characterized in that**, it comprises wooden components like composition board (15), fiberboard (16), and particle board (17) in the structure in order to enable the frame structure to be
upholstered with fabric.

4. A disassembled bed base according to any one of the preceding claims, **characterized in that**, it comprises plywood laths (13) inserted into an interfacing (18) so as to allow for placing a mattress on the frame structure of the disassembled bed base.

5. A disassembled bed base according to any one of the preceding claims, **characterized in that**, it comprises female-male fastener (14) in order to prevent the plywood laths (13) from bending and making noise due to its structure.

6. A disassembled bed base according to any one of the preceding claims, **characterized in that**, it comprises sheet metal profiles (1, 2, 3) that are positioned on plywood laths (13) inserted into an interfacing (18) of the disassembled bed base.

7. A disassembled bed base according to any one of the preceding claims, **characterized in that**, it comprises at least two vertical sheet metal profiles (1) with a thickness of 1 0x10x1 mm positioned into the vertical section of the frame structure.

8. A disassembled bed base according to any one of the preceding claims, **characterized in that**, it comprises at least two horizontal sheet metal profiles (2) with a thickness of 10x20 0.9 mm positioned into the horizontal section of the frame structure.

9. A disassembled bed base according to any one of the preceding claims, **characterized in that**, it comprises at least one inner sheet metal profile (3) with a thickness of 20x20 0.9 mm positioned into the inner section of the frame structure.

10. A disassembled bed base according to any one of the preceding claims **characterized in that**, it comprises wooden, metal and plastic materials.

## Patentansprüche

1. Zerlegte Bettbasis, die in zerlegter Konfiguration hergestellt und geliefert werden kann, **dadurch gekennzeichnet, dass** er umfasst; ein vertikales Metallprofil (1), ein horizontales Metallprofil (2), ein inneres Metallprofil (3), wobei beim Zusammenbau der zerlegten Bettbasis das vertikale Metallprofil (1), das horizontale Metallprofil (2) und das innere Metallprofil (3) miteinander verschweißt werden und so eine Rahmenstruktur bilden, wobei die zerlegte Bettbasis weiter ein verdecktes Kunststofbein (4), einen Bolzen (6), ein **L-**förmiges Laschenverbindungsstück (7) und Metallbeschläge (9) umfasst, wobei beim Zusammenbau der zerlegten Bettbasis die Metallbeschläge (9) mittels des Bolzens (6) und des L-förmigen Laschenverbindungsstücks (7) aneinander befestigt werden.

2. Zerlegte Bettbasis nach Anspruch 1, **dadurch gekennzeichnet, dass** sie Beschläge (9) umfasst, die mittels Bolzen (6) und L-förmigem Laschenstück (7) aneinander befestigt sind.

3. Zerlegte Bettbasis nach Anspruch 1 oder Anspruch 2, **dadurch gekennzeichnet, dass** sie Holzbauteile wie eine Holzwerkstoffplatte (15), Faserplatte (16) und Spanplatte (17) im Aufbau umfasst, um die Rahmenstruktur mit Stoff polstern zu können.

4. Zerlegte Bettbasis nach einem der vorhergehenden Ansprüche, **dadurch gekennzeichnet, dass** sie Sperrholzlatten (13) umfasst, die in eine Zwischenlage (18) eingesetzt sind, um das Auflegen einer Matratze auf die Rahmenstruktur der zerlegten Bettbasis zu ermöglichen.

5. Zerlegte Bettbasis nach einem der vorhergehenden Ansprüche, **dadurch gekennzeichnet, dass** sie Buchsen-Stecker-Befestigungsmittel (14) umfasst, um zu verhindern, dass sich die Sperrholzlatten (13) aufgrund ihrer Struktur biegen und Geräusche verursachen.

6. Zerlegte Bettbasis nach einem der vorhergehenden Ansprüche, **dadurch gekennzeichnet, dass** sie Metallprofile (1, 2, 3) umfasst, die auf Sperrholzlatten (13) positioniert sind, die in eine Zwischenlage (18) der zerlegten Bettbasis eingefügt sind.

7. Zerlegte Bettbasis nach einem der vorhergehenden Ansprüche, **dadurch gekennzeichnet, dass** sie wenigstens zwei vertikale Metallprofile (1) mit einer Dicke von 1 0x10x1 mm umfasst, die in den vertikalen Abschnitt der Rahmenstruktur eingesetzt sind.

8. Zerlegte Bettbasis nach einem der vorhergehenden Ansprüche, **dadurch gekennzeichnet, dass** sie wenigstens zwei horizontale Metallprofile (2) mit einer Dicke von 10x20 0,9 mm umfasst, die in den horizontalen Abschnitt der Rahmenstruktur eingesetzt sind.

9. Zerlegte Bettbasis nach einem der vorhergehenden Ansprüche, **dadurch gekennzeichnet, dass** sie wenigstens ein inneres Metallprofil (3) mit einer Dicke von 20x20 0,9 mm umfasst, das in den inneren Abschnitt der Rahmenstruktur eingesetzt ist.

10. Zerlegte Bettbasis nach einem der vorangehenden Ansprüche, **dadurch gekennzeichnet, dass** sie Holz-, Metall- und Kunststoffmaterialien umfasst.

## Revendications

1. Base de lit désassemblée, pouvant être fabriquée et livrée en configuration désassemblée, **caractérisée en ce qu'**elle comprend : un profilé en feuille métallique vertical (1), un profilé en feuille métallique horizontal (2), un profilé en feuille métallique interne (3), dans lequel, lors de l'assemblage de la base de lit désassemblée, le profilé en feuille métallique vertical (1), le profilé en feuille métallique horizontal (2) et le profilé en feuille métallique interne (3) sont soudés les uns aux autres, formant ainsi une structure de cadre, la base de lit désassemblée comprenant en outre un pied en plastique dissimulé (4), un boulon (6), une pièce d'articulation en forme de L (7) et des raccords métalliques (9), dans laquelle, lors de l'assemblage de la base de lit désassemblée, les raccords métalliques (9) sont fixés les uns aux autres au moyen du boulon (6) et de la pièce d'articulation en forme de L (7).

2. Base de lit désassemblée selon la revendication 1, **caractérisée en ce qu'**elle comprend des raccords métalliques (9) qui sont fixés les uns aux autres au moyen d'un boulon (6) et d'une pièce d'articulation en forme de L (7).

3. Base de lit désassemblée selon la revendication 1 ou la revendication 2, **caractérisée en ce qu'**elle comprend des éléments en bois tels qu'un panneau composite (15), un panneau de fibres (16) et un panneau de bois aggloméré (17) dans la structure afin de permettre à la structure de cadre d'être recouverte de tissu.

4. Base de lit désassemblée selon l'une quelconque des revendications précédentes, **caractérisée en ce qu'**elle comprend des lattes en contreplaqué (13) insérées dans un interfaçage (18) de manière à permettre la mise en place d'un matelas sur la structure de cadre de la base de lit désassemblée.

5. Base de lit désassemblée selon l'une quelconque des revendications précédentes, **caractérisée en ce qu'**elle comprend une fixation femelle-mâle (14) afin d'empêcher les lattes en contreplaqué (13) de se plier et de faire du bruit en raison de sa structure.

6. Base de lit désassemblée selon l'une quelconque des revendications précédentes, **caractérisée en ce qu'**elle comprend des profilés en feuille métallique (1, 2, 3) qui sont positionnés sur des lattes en contreplaqué (13) insérées dans un interfaçage (18) de la base de lit désassemblée.

7. Base de lit désassemblée selon l'une quelconque des revendications précédentes, **caractérisée en ce qu'**elle comprend au moins deux profilés en feuille métallique verticaux (1) d'une épaisseur de 10×10×1 mm positionnés dans la section verticale de la structure de cadre.

8. Base de lit désassemblée selon l'une quelconque des revendications précédentes, **caractérisée en ce qu'**elle comprend au moins deux profilés en feuille métallique horizontaux (2) d'une épaisseur de 10×20×0,9 mm positionnés dans la section horizontale de la structure de cadre.

9. Base de lit désassemblée selon l'une quelconque des revendications précédentes, **caractérisée en ce qu'**elle comprend au moins un profilé en feuille métallique interne (3) d'une épaisseur de 20×20×0,9 mm positionné dans la section interne de la structure de cadre.

10. Base de lit désassemblée selon l'une des revendications précédentes, **caractérisée en ce qu'**elle comprend des matériaux en bois, en métal et en plastique.
